(19) Europäisches Patentamt
European Patent Office
Office européen des brevets

(11) **EP 3 955 187 A1**

(12) **EUROPÄISCHE PATENTANMELDUNG**

(43) Veröffentlichungstag:
**16.02.2022  Patentblatt 2022/07**

(21) Anmeldenummer: **20190572.6**

(22) Anmeldetag: **11.08.2020**

(51) Internationale Patentklassifikation (IPC):
**G06Q 10/06** (2012.01)      **G06Q 50/04** (2012.01)

(52) Gemeinsame Patentklassifikation (CPC):
**G06Q 10/063; G06Q 50/04**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Klein, Wolfram**
**85579 Neubiberg (DE)**
• **Rothbauer, Stefan**
**86156 Augsburg (DE)**
• **Wehrstedt, Jan Christoph**
**81829 München (DE)**

(54) **KONTINUIERLICHE BESTIMMUNG KRITISCHER PRODUKTIONSSCHRITTE FÜR DIE FLEXIBLE PRODUKTFERTIGUNG**

(57)     Die Erfindung betrifft ein Verfahren zur Produktionsplanung, bei dem für mindestens einen Produktionsablauf eine Gesamtbewertungsgröße vorliegt. Ein Produktionsablauf umfasst hierbei eine Mehrzahl von Produktionsschritten. Aus der oder den Gesamtbewertungsgrößen werden Einzelbewertungsgrößen für die Produktionsschritte ermittelt, wobei sich jede Gesamtbewertungsgröße aus der Summe der Einzelbewertungsgrößen der Produktionsschritte des jeweiligen Produktionsablaufs zusammensetzt. Zur Ermittlung der Einzelbewertungsgrößen wird ein unter- oder überbestimmtes Gleichungssystem aufgestellt und gelöst.

## FIG 3

| | PR_MA1_1 | PR_MA7 | RIS-ges |
|---|---|---|---|
| PROD 1 | 2 | 1 | F-PROD1 |
| PROD 2 | 1 | 3 | F-PROD2 |

Printed by Jouve, 75001 PARIS (FR)

**Beschreibung**

Die Erfindung betrifft ein Verfahren zur Produktionsplanung, bei dem für mindestens einen Produktionsablauf eine Gesamtbewertungsgröße vorliegt, wobei der Produktionsablauf eine Mehrzahl von Produktionsschritten umfasst.

In großen komplexen Produktionsanlagen ist oft unklar, welche Maschinen bzw. welche Produktionsschritte zu der finalen Produktqualität in welchem Ausmaß beitragen, welche Maschine oder welcher Produktionsschritt am kritischsten ist, und welche Tests am besten durchgeführt werden sollten, um einerseits eine stabile Qualität bei andererseits geringem Testaufwand zu erhalten. Wenn dieses Wissen vorhanden wäre, dann könnte der gesamte Produktionsablauf und somit die Entscheidung, welche Maschinen und Produktionsschritte für die Produktfertigung sinnvollerweise anzuwenden sind, besser geplant werden. Auch könnte die Produktionszeit für eine zu erzielende Qualität, die Menge der benötigten Eingangsmaterialien, der Energieverbrauch der Produktion, und sogar Maßnahmen zur Modernisierung oder Wartung besser prognostiziert und geplant werden.

Der Erfindung liegt die Aufgabe zugrunde, ein verbessertes Verfahren zur Produktionsplanung aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Das erfindungsgemäße Verfahren dient der Produktionsplanung. Hierfür liegt für mindestens einen Produktionsablauf eine Gesamtbewertungsgröße vor. Dieser mindestens eine Produktionsablauf umfasst eine Mehrzahl von Produktionsschritten. Aus der oder den Gesamtbewertungsgrößen werden Einzelbewertungsgrößen für die Produktionsschritte ermittelt. Hierbei ergibt sich jede Gesamtbewertungsgröße aus der Summe der Einzelbewertungsgrößen der Produktionsschritte des jeweiligen Produktionsablaufs. Zur Ermittlung der Einzelbewertungsgrößen wird ein unter- oder überbestimmtes Gleichungssystem für die zu ermittelnden Einzelbewertungsgrößen aufgestellt und gelöst.

Es wird einer oder mehrere Produktionsabläufe betrachtet. Im Falle mehrerer Produktionsabläufe können diese der Herstellung des gleichen oder unterschiedlicher Produkte dienen. Für den einen oder die mehreren Produktionsabläufe wird für jeden beteiligten Produktionsschritt eine oder mehrere Einzelbewertungsgrößen ermittelt. Ziel dieses Vorgehens ist es, die ermittelten Einzelbewertungsgrößen für die Produktionsplanung heranzuziehen. Bei der Produktionsplanung wird u.a. entschieden, welche Produktionsschritte auf welcher Maschine durchzuführen sind, um ein bestimmtes Produkt zu fertigen.

Die Ermittlung der Einzelbewertungsgrößen basiert auf der Kenntnis einer Gesamtbewertungsgröße pro Produktionsablauf. Diese ist vorzugsweise durch Analyse eines mit dem Produktionsablauf gefertigten Produktes erhalten worden. Alternativ hierzu ist es aber auch möglich, eine durch Rechnung oder andersartig festgelegte Größe als Gesamtbewertungsgröße zu verwenden. Die Gesamtbewertungsgröße gibt die Güte des Produktionsablaufs an; sie kann die finale Qualität des Produktes, oder auch Produktionszeit oder -kosten, abbilden. Entsprechendes gilt für die Einzelbewertungsgrößen in Bezug auf die einzelnen Produktionsschritte. Kennt man die Einzelbewertungsgrößen der Produktionsschritte, so lässt sich die Gesamtbewertungsgröße des jeweiligen Produktionsablaufs bestimmen, da sich die Gesamtbewertungsgröße als Summe aller Einzelbewertungsgrößen des jeweiligen Produktionsablaufs berechnen lässt.

Die Vorgehensweise bei der Ermittlung der Einzelbewertungsgrößen beruht darauf, ein Gleichungssystem aufzustellen, in dem die zu ermittelnden Einzelbewertungsgrößen die Variablen darstellen, deren Werte sich durch Lösung des Gleichungssystems ergeben. Abhängig davon, wie viele Gesamtbewertungsgrößen zur Verfügung stehen und wie viele Produktionsschritte bei den zu den Gesamtbewertungsgrößen gehörenden Produktionsabläufen beteiligt sind, kann dieses Gleichungssystem unter- oder überbestimmt sein. Durch Hinzunahme oder Entfernen von Gesamtbewertungsgrößen kann ein Wechsel des Gleichungssystems von einem unter- in einen überbestimmten Zustand und umgekehrt stattfinden.

Besonders vorteilhaft ist es, wenn nach einer ersten Ermittlung der Einzelbewertungsgrößen für einen weiteren Produktionsablauf eine neue Gesamtbewertungsgröße vorliegt, und unter Berücksichtigung der neuen Gesamtbewertungsgröße erneut eine Ermittlung der Einzelbewertungsgrößen erfolgt. Im Vergleich zu den bei der ersten Ermittlung der Einzelbewertungsgrößen betrachteten Produktionsabläufen kann der weitere Produktionsablauf der Herstellung des gleichen oder eines andersartigen Produktes dienen. Die neue Gesamtbewertungsgröße kann zusätzlich zu den bei der ersten Ermittlung der Einzelbewertungsgrößen verwendeten Gesamtbewertungsgrößen zum Einsatz kommen. Es ist jedoch auch möglich, dass eine oder mehrere der bei der ersten Ermittlung der Einzelbewertungsgrößen verwendeten Gesamtbewertungsgrößen bei der erneuten Ermittlung nicht mehr verwendet werden und statt dessen die neue Gesamtbewertungsgröße eingesetzt wird.

In Ausgestaltung der Erfindung erfolgt eine mehrfache Ermittlung der Einzelbewertungsgrößen. Hierdurch kann die Veränderung von zumindest einer der Einzelbewertungsgrößen über die mehreren Ermittlungen betrachtet analysiert werden. Dies ermöglicht insbesondere die Beobachtung der zeitlichen Entwicklung einer Einzelbewertungsgröße, wenn die Gesamtbewertungsgrößen zu verschiedenen Zeitpunkten ermittelt wurden. Auf diese Weise kann z.B. durch Betrachtung einer Veränderung eine Entscheidung über eine Wartung einer für den jeweiligen Produktionsschritt zuständigen Maschine erfolgen. Für die Durchführung einer Wartung einer bestimmten Maschine kann entschieden werden, wenn sich die Einzelbewertungsgröße eines Produktionsschritts auf dieser Maschine zunehmend verschlechtert oder eine gesetzte Schwelle über- oder unterschreitet.

In Weiterbildung der Erfindung wird im Fall eines unterbestimmten Gleichungssystems für zumindest eine der zu ermittelnden Einzelbewertungsgrößen ein Wert vorgegeben und der Ermittlung der anderen Einzelbewertungsgrößen zugrunde gelegt wird. Auf diese Weise kann z.B. demjenigen Produktionsschritt, über den am meisten Wissen vorhanden ist, ein Wert für die Einzelbewertungsgrößen zugeordnet werden. Ziel der Vorgabe von Werten ist es hierbei, dass Gleichungssystem in einen nicht mehr unterbestimmten Zustand zu überführen, indem die Anzahl an Variablen reduziert wird. Bei einem überbestimmten Gleichungssystem ist insbesondere eine Ausgleichsrechnung eine geeignete Methode zur Ermittlung der Einzelbewertungsgrößen.

Da die Einzelbewertungsgrößen eine Aussage über die Qualität des jeweiligen Produktionsschrittes darstellen, kann besonderes Augenmerk auf schlechte Einzelbewertungsgrößen gelegt werden. So kann unter Verwendung der ermittelten Einzelbewertungsgrößen eine Entscheidung über eine in Bezug auf zumindest einen Produktionsschritt durchzuführende Messung erfolgen. Eine Messung ermöglicht es, Fehler festzustellen und gegebenenfalls zu beheben, so dass die Qualität des jeweiligen Produktionsschrittes gesteigert werden kann.

Besonders vorteilhaft ist es, wenn unter Verwendung der ermittelten Einzelbewertungsgrößen eine Produktionsplanung erfolgt und zumindest ein Produkt gemäß der Produktionsplanung gefertigt wird.

Im Folgenden wird die Erfindung anhand eines Ausführungsbeispiels näher erläutert. Dabei zeigen:

Figur 1: eine Produktionsanlage,

Figur 2: einen Verfahrensablauf,

Figur 3: eine Fehlertabelle.

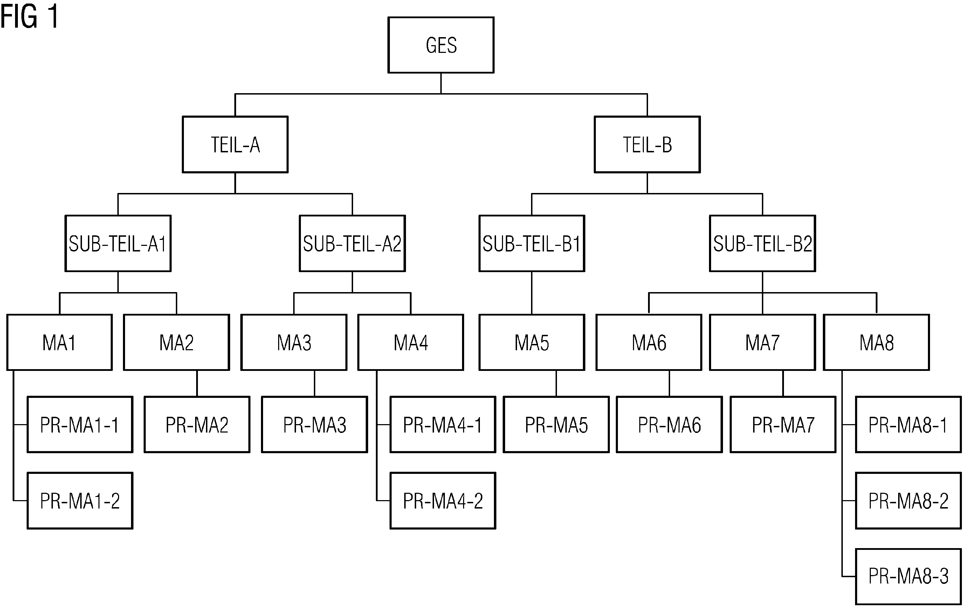

Mittels der in Figur 1 gezeigten komplexen Produktionsanlage GES können verschiedene Produkte hergestellt werden. Die gesamte Produktionsanlage GES ist in Teilanlagen hierarchisch über zwei Ebenen organisiert, sie umfasst hierzu zwei Teilanlagen TEIL-A und TEIL-B, wobei diese wiederum die Sub-Teilanlagen SUB-TEIL-A1 und SUB-TEIL-A2 bzw. SUB-TEIL-B1 und SUB-TEIL-B2 umfassen. Ferner gehören zu jeder Sub-Teilanlage eine oder mehrere Maschinen, und zwar zur Sub-Teilanlage SUB-TEIL-AI die Maschinen MA1 und MA2, zur Sub-Teilanlage SUB-TEIL-A2 die Maschinen MA3 und MA4, zur Sub-Teilanlage SUB-TEIL-B1 die Maschine MA5, zur Sub-Teilanlage SUB-TEIL-B2 die Maschinen MA6, MA7 und MA8. Auf jeder Maschine kann einer oder mehrere verschiedene Produktionsschritte ablaufen, und zwar auf der Maschine MA1 die Produktionsschritte PR-MA1-1 und PR-MA1-2, auf der Maschine MA2 der Produktionsschritt PR-MA2, auf der Maschine MA3 der Produktionsschritt PR-MA3, auf der Maschine MA4 die Produktionsschritte PR-MA4-1 und PR-MA4-2, auf der Maschine MA5 der Produktionsschritt PR-MA5, auf der Maschine MA6 der Produktionsschritt PR-MA6, auf der Maschine MA7 der Produktionsschritt PR-MA7, und auf der Maschine MA8 die Produktionsschritte PR-MA8-1, PR-MA8-2 und PR-MA8-3.

Selbstverständlich sind die in Figur 1 gezeigten Anzahlen an Teilanlagen, an Maschinen und Produktionsschritten beispielhaft; üblicherweise verfügen komplexen Produktionsanlagen über größere Anzahlen.

Zur Produktion eines bestimmten Produktes wird eine Teilmenge oder alle der Produktionsschritte PR-MA1-1, PR-MA1-2, PR-MA2, PR-MA3, PR-MA4-1, PR-MA4-2, PR-MA5, PR-MA6, PR-MA7, PR-MA8-1, PR-MA8-2, PR-MA8-3 in einer bestimmten Reihenfolge durchlaufen. Diese Reihenfolge oder Kontrollstrategie wird im Folgenden als Produktionsablauf bezeichnet. Hierbei ist es möglich, dass einer oder mehrere Produktionsschritte auf verschiedenen Maschinen durchgeführt, diese Maschinen also alternativ eingesetzt werden können. Es handelt sich bei der Produktionsanlage also nicht um ein einfaches Förderband, bei dem alle Produkte die gleichen Produktionsschritte durchlaufen. Vielmehr sind autonome Transporteinheiten vorhanden, welche das in der Produktion befindliche Produkt von Maschine zu Maschine transportieren, so dass pro Produkt ein unterschiedlicher Produktionsablauf stattfinden kann.

Das im folgenden beschriebene Vorgehen ist relevant für Produkte, die weitgehend automatisiert in Fertigungsstraßen produziert werden und Qualitätsziele haben. Dies trifft auf praktisch alle heutzutage in Fabriken gefertigten Produkte zu. Ein einfaches Beispiel wäre ein Schrank oder seine Bestandteile, wobei Wände und Regale für den Zusammenbau vorbereitet werden, indem diese mit mehreren Löchern in einer bestimmten Anordnung versehen werden. Hierfür kann ein Maschinenplatz mit einer Bohrmaschine, aber auch zwei parallele Plätze vorgesehen sein, wobei der zweite Platz relativ zum ersten z.B. nicht nur Löcher bohren sondern auch noch stanzen kann, also gegenüber dem ersten eine erweiterte Funktionalität aufweist. Der Produktionsablauf kann daher vorsehen, dass die Löcher entweder von der ersten Maschine, also am ersten Maschinenplatz, oder von der zweiten Maschine gebohrt werden.

Für die Planung eines Produktionsablaufs ist es wichtig zu wissen, welche Auswirkung ein bestimmter Produktionsschritt auf einer bestimmten Maschine bezüglich der finalen Produktqualität hat. Wenn dieses Wissen vorhanden wäre, könnte die Auswahl der Maschinen und Produktionsschritte so bestimmt werden, dass eine bestimmte Mindestqualität für das Produkt erreicht wird. Auch die hierfür anfallenden Kosten und die Dauer der jeweiligen Produktion könnten dann genauer prognostiziert werden.

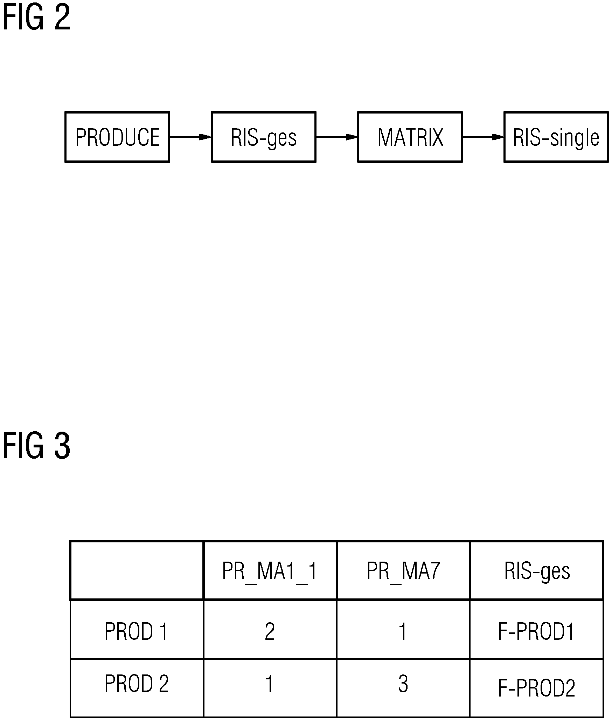

Das im Folgenden anhand von Figur 2 beschriebene Verfahren dient der besseren Qualitätsplanung eines Produktionsablaufs. Dies ist relevant insbesondere bezogen auf eine "Industrie 4.0 Fertigung" mit Hinsicht auf "Lot Size 1" bzw. Losgröße 1 Produktion, also der Sonderanfertigung von nur einzelnen Exemplaren eines Produktes, oder auch von sehr spezifischen Produkten. Üblicherweise sind nämlich bei einer "Lot Size 1" Produktion nicht genügend reale Daten vorhanden für die Beurteilung des Einflusses einzelner Produktionsschritte / Maschinen auf die finale Produktqualität.

Im ersten Schritt PRODUCE werden zwei verschiedene Produkte produziert, wobei für das erste Produkt ein erster Produktionsablauf und für das zweite Produkt ein zweiter, hiervon unterschiedlicher Produktionsablauf angewandt wird. Im Anschluss wird jedes der beiden Produkte untersucht und hieraus der Gesamtfehler RIS-ges des jeweiligen Produktionsablaufs bestimmt. Dieser Gesamtfehler RIS-ges entspricht der Gesamt-Risikobewertung des jeweiligen Produktionsablaufs, welche z.B. in zu erwartendem Schaden in Euro angegeben werden kann, oder auch als anderer numerischer Wert. Der Gesamtfehler RIS-ges berechnet sich als Summe der Einzelfehler aller bei dem betrachteten Produktionsablauf durchlaufenen Produktionsschritte. Bezogen auf das Produkt bezieht sich die Risikobewertung darauf, die geforderte Produktqualität nicht ausreichend zu erreichen.

Alternativ zum Vorliegen von realen Gesamtfehlern RIS-ges eines Produktionsablaufs können diese auch als Zielgröße im Sinne einer Qualitätsanforderung an ein Produkt gegeben sein.

Das Ziel des erläuterten Verfahrens ist es, ausgehend vom Gesamtfehler RIS-ges die Einzelfehler RIS-single der einzelnen Produktionsschritte zu bestimmen. Dies erfolgt mittels einer Matrixkalkulation MATRIX. Figur 3 zeigt beispielhaft eine hierbei zum Einsatz kommende Tabelle.

Figur 3 zeigt den Fall, dass die beiden Produkte PROD1 und PROD2 produziert wurden. Der Gesamtfehler RIS-ges des Produktes PROD1 sei F-PROD1, derjenige des Produktes PROD2 sei F-PROD2. Bei dem Produktionsablauf für das Produkt PROD1 wurde der Produktionsschritt PR-MA1-1 zweimal durchlaufen, und der Produktionsschritt PR-MA7 einmal. Bei dem Produktionsablauf für das Produkt PROD2 wurde der Produktionsschritt PR-MA1-1 einmal durchlaufen, und der Produktionsschritt PR-MA7 dreimal. Abweichend zu diesem Beispiel ist es auch möglich, dass verschiedene Produktionsschritte auf der gleichen Maschine ablaufen.

Da sich der Gesamtfehler RIS-ges einer bestimmten Produktion aus der Summe der Einzelfehler der hierzu verwendeten Produktionsschritte zusammensetzt, gilt:

$$\text{F-PROD1} = 2*\text{F(PR\_MA1\_1)} + 1*\text{F(PR\_MA7)}$$

$$\text{F-PROD2} = 1*\text{F(PR\_MA1\_1)} + 3*\text{F(PR\_MA7)}.$$

Hierbei bezeichnet F(PR_MA1_1) den Einzelfehler des Produktionsschrittes PR-MA1-1, und F(PR_MA7) den Einzelfehler des Produktionsschrittes PR-MA7.

Basierend auf der in Figur 3 dargestellten Tabelle kann also ein Gleichungssystem aufgestellt werden, mit welchem die Einzelfehler F(PR_MA1_1) und F(PR_MA7) berechnet werden können. Diese werden dann im Schritt RIS-single der Figur 2 als Ergebnis ausgegeben.

Üblicherweise werden zur Herstellung eines Produktes mehr als die zwei in Figur 3 dargestellten Produktionsschritte benötigt. Daraus folgt, dass die Tabelle anfänglich üblicherweise nur wenige Zeilen, aber viele Spalten aufweist. Daher ist das Gleichungssystem zu Beginn i.d.R. unterbestimmt. In diesem Fall werden zunächst für manche der zu berechnenden Einzelfehler Annahmen getroffen und diese angenommenen Werte in das Gleichungssystem eingesetzt. Hierbei gilt, dass bezüglich verschiedener Produktionsschritte üblicherweise ein unterschiedlicher Kenntnisstand vorhanden ist:

    a. quantitativ Werte sind zumindest ungefähr vorhanden, relativ sichere Angabe des Einzelfehlers ist möglich;
    b. semi-quantitativ, d.h. zumindest eine Bewertung in gewissen Bereichen ist mit relativer Sicherheit möglich;
    c. keine sichere Kenntnis, z. B. bei neuartigen Produktionsschritten, Materialien etc.

Wenn aufgrund der Unterbestimmtheit des Gleichungssystems Annahmen bezüglich der Einzelfehler von Produktionsschritten zu treffen sind, sollte dies bevorzugt für die oben beschriebene Kategorie a. erfolgen, und, wenn dies nicht möglich ist, für die Kategorie b.

Im Laufe der Produktion liegen zunehmend mehr Werte für den Gesamtfehler RIS-ges vor. Dies können neue Werte für die bereits betrachteten Produkte PROD1 und PROD2 bzw. deren Produktionsabläufe sein. Z.B. kann jedes x-te produzierte Produkt untersucht und dessen Fehler bestimmt werden. Es wird dann ein neu ermittelter Gesamtfehler RIS-ges in eine neue Zeile der Matrix eingefügt. Es können aber auch Gesamtfehler RIS-ges für andere Produktionsabläufe einbezogen werden. In diesem Fall kann auch die Anzahl der Spalten erhöht werden, indem neue Produktionsschritte eingefügt werden. Dies kann dazu führen, dass das Gleichungssystem überbestimmt ist. Für das überbestimmte Gleichungssystem existiert üblicherweise keine korrekte Lösung. Die Einzelfehler können in diesem Fall mit Hilfe einer Ausgleichsrechnung, insbesondere mit einer linearen Ausgleichsrechnung, berechnet werden. Die Ausgleichsrechnung stellt ein an sich bekanntes Verfahren zur Lösung überbestimmter Probleme dar. Sie beruht üblicherweise auf der Minimierung der Summe quadratischer Abweichungen. Bei der linearen Ausgleichsrechnung wird eine lineare Zielfunktion eingesetzt. Alternativ können auch andere mathematische Lösungswege beschritten werden, z.B. ein probabilistisches Verfahren.

Es ist auch möglich, bei Hinzufügen eines neuen Gesamtfehlers RIS-ges, also einer neuen Zeile, den ältesten Eintrag aus der Tabelle zu löschen. Anstelle der Zeile mit dem ältesten Eintrag kann auch eine andere Zeile entfernt werden, wie z.B. die Zeile mit dem ältesten Eintrag für den gleichen Produktionsablauf wie die neu hinzugefügte Zeile. Es kann auch eine maximale Anzahl an Zeilen vorgegeben werden, bei deren Überschreiten Zeilen gelöscht werden. Ferner kann vorgesehen sein, von Zeit zu Zeit die vorhandene Tabelle zu löschen und neu aufzusetzen.

Dadurch, dass mit der Zeit neue Gesamtfehler RIS-ges zur Tabelle hinzugefügt und alle Einzelfehler RIS-single daraufhin neu berechnet werden, kann die zeitliche Entwicklung der Qualität der einzelnen Produktionsschritte beobachtet werden. Startend mit zu erwartenden anfänglichen Schwankungen, da zu Beginn nur wenige Daten für Gesamtfehler RIS-ges vorhanden sind, erreichen die Werte für die berechneten Einzelfehler RIS-single schließlich Durchschnittswerte, welche über einen längeren Zeitraum hin verlässlich sind. Sollte der Einzelfehler RIS-single für einen bestimmten Produktionsschritt sich verschlechtern, kann die betreffende Maschine untersucht und gegebenenfalls ersetzt oder repariert werden.

Anhand eines sich ändernden Einzelfehlers RIS-single kann die Maschinenperformance beurteilt werden, bei einem sich verschlechternden Einzelfehler RIS-single kann man somit Alterung und Verschleiß einer Maschine beobachten und entsprechende Maßnahmen treffen. Eine solche Maßnahme ist insbesondere die Organisation einer Wartung der betroffenen Maschine. Hierfür gilt, dass man diese Maßnahme üblicherweise möglichst spät durchführen möchte, da eine Wartung, die verfrüht ist, da die von der Maschine gelieferte Qualität noch ausreichend hoch ist für das zu produzierende Produkt, unnötige Kosten verursacht. Andererseits sollte die Wartung so rechtzeitig geplant werden, dass es nicht zu einer ungeplanten Wartung während des Betriebs und somit zu einer Produktionsunterbrechung kommt, welche nötig sein könnte, wenn sich während des Betriebs der Maschine herausstellt, dass die erbrachte Qualität nicht mehr ausreichend ist. Daher kann die Beobachtung der zeitlichen Entwicklung des Einzelfehlers RIS-single helfen, zu einem günstigen Zeitpunkt die Wartung der Maschine zu planen, welcher zwischen den beiden unerwünschten Szenarien des zu früh oder zu spät liegt.

Interessant ist auch die Berechnung der Schwankungsbreite: wenn fortlaufend neue Einträge in die Tabelle aufgenommen werden, können die Einzelfehler RIS-single regelmäßig neu berechnet werden. Es bietet sich z.B. an, diese Einzelfehler RIS-single täglich neu zu berechnen. Die Schwankungen dieser Werte RIS-single kann man auswerten. Ein stark schwankender Einzelfehler RIS-single kann als Anlass verwendet werden, den jeweiligen Produktionsschritt durch Tests o.ä. genauer zu untersuchen.

Die nun gewonnene Kenntnis der Einzelfehler RIS-single kann schließlich zur Produktionsplanung herangezogen werden:

- Bezüglich der besonders kritischen Produktionsschritte, d.h. bei denjenigen, welche einen großen Einzelfehler RIS-single aufweisen, kann überlegt werden, ob diese umgangen werden können. Dies wäre z.B. möglich durch Austausch der betroffenen Maschine, d.h. durch Durchführung des Produktionsschrittes auf einer anderen Maschine, entweder auf einer bereits in der Produktionsanlage existierenden oder einer neu zu beschaffenden. Sollte es nicht realisierbar sein, diesen Produktionsschritt zu umgehen, können alternative Abhilfemaßnahmen getroffen werden, wie z.B. eine häufigere oder intensivere Prüfung des hergestellten Produktes.
- Die besonders sicheren Produktionsschritte, d.h. diejenigen, welche einen niedrigen Einzelfehler RIS-single aufweisen, sollten bevorzugt für die Produktion verwendet werden.
- Aus der Kenntnis aller Einzelfehler RIS-single können Aussagen über die zu erwartende Produktionszeit gewonnen werden, einschließlich der für die Überprüfung und eventuellen Korrektur/Nachbearbeitung des Produktes, sowie über den hierfür erforderlichen Materialbedarf und den Energieverbrauch der Produktion.

Von Vorteil bei der beschriebenen Vorgehensweise ist, dass eine gute Qualität eines zu produzierenden Produktes erreicht werden kann, ohne dass viele Tests an Maschinen nötig sind. Denn Tests sind zeit- und kostenaufwändig, so dass diese nur durchgeführt werden sollten, wenn wirklich notwendig. Dies wird erreicht, indem der Gesamtfehler RIS-ges mancher Produkte bestimmt wird und unter Ausnutzung geeigneter mathematischer Methoden und gegebenenfalls unter Zuhilfenahme von teilweise vorhandener Erfahrungen bzw. vorhandenes Wissen über die Qualität einzelner Produktionsschritte der Einzelfehler RIS-single aller Produktionsschritte bestimmt wird.

Dadurch, dass während der Produktion Informationen gesammelt werden, um mit Hilfe der erläuterten Matrixrechnung den Beitrag jedes Produktionsschrittes zur Gesamtqualität zu berechnen, kann

- eine neue Produktion besser geplant und somit der Produktionsablauf besser gesteuert werden bzgl. der Qualität der benutzten Maschinen,
- der zeitlich in der Vergangenheit liegende "Qualitätsverlauf" besser verfolgt werden,
- der zeitlich in der Zukunft liegende "Qualitätsverlauf" durch eine Simulation oder Extrapolation des Produktionsablaufs ermittelt und kontinuierlich aktualisiert werden.

Das Verfahren kann auf einem Computer durchgeführt werden. Das hierauf laufende Programm erhält Informationen über einen oder mehrere Produktionsabläufe, wobei pro Produktionsablauf der Gesamtfehler RIS-ges und die Art und Anzahl der durchgeführten Produktionsschritte enthalten ist. Diese anfänglichen Informationen werden mit der Zeit um weitere Informationen über den oder die gleichen oder auch über andere Produktionsabläufe ergänzt. Das Programm berechnet aus den Informationen die Einzelfehler RIS-single aller beteiligten Produktionsschritte. Das hierfür angewandte mathematische Vorgehen hängt von ab, ob das Gleichungssystem zur Ermittlung der Einzelfehler unter- oder überbestimmt ist. Im Falle der Unterbestimmung fordert das Programm zur Eingabe von Informationen bzgl. mancher Einzelfehler RIS-single auf, welche dann der Berechnung der anderen Einzelfehler RIS-single zugrunde gelegt werden.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

**Patentansprüche**

1. Verfahren zur Produktionsplanung, bei dem
   für mindestens einen Produktionsablauf eine Gesamtbewertungsgröße (RIS-ges) vorliegt,
   wobei der mindestens eine Produktionsablauf eine Mehrzahl von Produktionsschritten umfasst,
   aus der oder den Gesamtbewertungsgrößen (RIS-ges) Einzelbewertungsgrößen (RIS-single) für die Produktionsschritte ermittelt werden, wobei sich jede Gesamtbewertungsgröße (RIS-ges) aus der Summe der Einzelbewertungsgrößen (RIS-single) der Produktionsschritte des jeweiligen Produktionsablaufs zusammensetzt,
   indem für die zu ermittelnden Einzelbewertungsgrößen (RIS-single) ein unter- oder überbestimmtes Gleichungssystem aufgestellt und gelöst wird.

2. Verfahren nach Anspruch 1, bei dem
   nach einer ersten Ermittlung der Einzelbewertungsgrößen (RIS-single) für einen weiteren Produktionsablauf eine neue Gesamtbewertungsgröße (RIS-ges) vorliegt, und
   unter Berücksichtigung der neuen Gesamtbewertungsgröße (RIS-ges) erneut eine Ermittlung der Einzelbewertungsgrößen (RIS-single) erfolgt.

3. Verfahren nach Anspruch 2, bei dem
   die Berücksichtigung der neuen Gesamtbewertungsgröße (RIS-ges) anstelle einer bei der ersten Ermittlung verwendeten Gesamtbewertungsgröße (RIS-ges) erfolgt.

4. Verfahren nach einem der Ansprüche 1 bis 3, bei dem eine mehrfache Ermittlung der Einzelbewertungsgrößen (RIS-single) erfolgt, und
   die Veränderung von zumindest einer der Einzelbewertungsgrößen (RIS-single) ausgewertet wird.

5. Verfahren nach Anspruch 4, bei dem
   unter Verwendung der Veränderung eine Entscheidung über eine Wartung einer für den jeweiligen Produktionsschritt zuständigen Maschine erfolgt.

6. Verfahren nach einem der Ansprüche 1 bis 5, bei dem im Fall eines unterbestimmten Gleichungssystems für zumindest eine der zu ermittelnden Einzelbewertungsgrößen (RIS-single) ein Wert vorgegeben und der Ermittlung der anderen Einzelbewertungsgrößen (RIS-single) zugrunde gelegt wird.

7. Verfahren nach einem der Ansprüche 1 bis 5, bei dem im Fall eines überbestimmten Gleichungssystems eine Ausgleichsrechnung der Ermittlung der Einzelbewertungsgrößen (RIS-single) zugrunde gelegt wird.

8. Verfahren nach einem der Ansprüche 1 bis 7, bei dem unter Verwendung der ermittelten Einzelbewertungsgrößen (RIS-single) eine Entscheidung über eine in Bezug auf zumindest einen Produktionsschritt durchzuführende Messung erfolgt.

9. Verfahren nach einem der Ansprüche 1 bis 8, bei dem unter Verwendung der ermittelten Einzelbewertungsgrößen (RIS-single) eine Produktionsplanung erfolgt und zumindest ein Produkt gemäß der Produktionsplanung gefertigt wird.

10. Vorrichtung oder System zur Datenverarbeitung, umfassend
Mittel zur Ausführung des Verfahrens nach einem der Ansprüche 1 bis 9.

11. Computerprogramm, umfassend Befehle, die bei der Ausführung des Programms durch einen Computer diesen veranlassen, die Schritte des Verfahrens nach einem der Ansprüche 1 bis 9 auszuführen.

12. Computerlesbarer Datenträger, auf dem das Computerprogramm nach Anspruch 11 gespeichert ist.

13. Datenträgersignal, das das Computerprogramm nach Anspruch 11 überträgt.

FIG 1

FIG 2

```
┌──────────┐     ┌──────────┐     ┌──────────┐     ┌────────────┐
│ PRODUCE  │ ──▶ │ RIS-ges  │ ──▶ │  MATRIX  │ ──▶ │ RIS-single │
└──────────┘     └──────────┘     └──────────┘     └────────────┘
```

FIG 3

|        | PR_MA1_1 | PR_MA7 | RIS-ges |
|--------|----------|--------|---------|
| PROD 1 | 2        | 1      | F-PROD1 |
| PROD 2 | 1        | 3      | F-PROD2 |

**Europäisches Patentamt**
**European Patent Office**
**Office européen des brevets**

# EUROPÄISCHER RECHERCHENBERICHT

**Nummer der Anmeldung**

EP 20 19 0572

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 041424 A1 (ABB RESEARCH LTD [CH]) 5. März 2009 (2009-03-05) * Absätze [0019], [0020], [0032] - [0074] * ----- | 1-13 | INV. G06Q10/06 G06Q50/04 |
| X | WO 2019/025594 A1 (SIEMENS AG [DE]) 7. Februar 2019 (2019-02-07) * das ganze Dokument * ----- | 1-13 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 1. Dezember 2020 | Breidenich, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 0572

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-12-2020

| Im Recherchenbericht angeführtes Patentdokument | Datum der Veröffentlichung | Mitglied(er) der Patentfamilie | Datum der Veröffentlichung |
|---|---|---|---|
| DE 102007041424 A1 | 05-03-2009 | BR PI0816060 A2 | 31-03-2015 |
| | | CN 101790746 A | 28-07-2010 |
| | | DE 102007041424 A1 | 05-03-2009 |
| | | EP 2195779 A1 | 16-06-2010 |
| | | JP 5341090 B2 | 13-11-2013 |
| | | JP 2010537328 A | 02-12-2010 |
| | | WO 2009030364 A1 | 12-03-2009 |
| WO 2019025594 A1 | 07-02-2019 | CN 111149126 A | 12-05-2020 |
| | | DE 102017213583 A1 | 07-02-2019 |
| | | EP 3646279 A1 | 06-05-2020 |
| | | US 2020175447 A1 | 04-06-2020 |
| | | WO 2019025594 A1 | 07-02-2019 |

EPO FORM P0461

Für nähere Einzelheiten zu diesem Anhang : siehe Amtsblatt des Europäischen Patentamts, Nr.12/82